# EUROPEAN PATENT APPLICATION

(11) **EP 4 393 295 A1**
(43) Date of publication of application: **03.07.2024**
(21) Application number: 22216844.5
(22) Date of filing: 27.12.2022
(51) Int. Cl.: A01D 89/00, A01D 61/00

(54) **AUGER ASSEMBLY FOR A FORAGE HARVESTER**

(71) Applicant: CNH Industrial Belgium N.V., 8210 Zedelgem (BE)
(72) Inventor: Van Belleghem, Stijn, 9990 Maldegem (BE); Blancke, Jeffrey, 8720 Markegem (BE); Tanghe, Wim, 8560 Wevelgem (BE)
(74) Representative: CNH Industrial IP Department

(57) **Abstract**

According to the invention, an auger assembly (1) for a forage harvester is provided comprising a frame unit (3) having a floor element (4), an auger tube (5) having an auger axis (7), a first end (9) and a second end (11), at least one flighting (13) attached to the auger tube (5), a first auger arm (15) and a second auger arm (17) attached to the frame unit (3) for holding the auger tube (5) between the first auger arm (15) and the second auger arm (17), at least one drive assembly (19) configured for rotating the auger tube (5), the at least one drive assembly (19) being located on at least one side of the auger tube (5), a first bearing (21) for rotatably holding the first end (9) of the auger tube (5) at the first auger arm (15) and a second bearing (23) for rotatably holding the second end (11) of the auger tube (5) at the second auger arm (17), wherein a third bearing (25) is provided on the auger tube (5) between the first bearing (21) and the second bearing (23), the third bearing (25) ensuring the orientation of the auger axis (7) parallel to the floor element (4) of the frame unit (3).

## Description

The present invention generally relates to an auger assembly to be used on the header of a harvesting machine, and particularly to an auger assembly for a forage harvester.

The known agricultural practice of forage harvesting consists of cutting either green or mature crop material into discrete particles and of conveying the particles from the field to a storage facility, such as a silo. While in storage, the crop material undergoes an acid fermentation to give the particles an agreeable flavor and to prevent spoilage. This overall operation, which is commonly referred to as an ensilage process, converts standing crop in the field to livestock feed, generally called silage.

When harvesting plants with agricultural harvesting machines such as forage harvesters, it is common practice to initially pick the crop to be harvested from the ground or to cut the crop. This is usually done by a pick-up assembly located on a header assembly of the agricultural harvester. The plants or crop are then conveyed transverse to the moving direction of the harvesting machine and sent to an intake channel and subsequently transported to the central processing device of the forage harvester. The lateral or transverse conveyance is realized in most harvesting pick-up headers by an auger assembly.

Known auger assemblies comprise an auger tube, are usually pivotable and typically driven from at least one side of the auger tube. They transport crop in opposing directions from the left and right ends and/or sides to the center section of the header. The crop distribution along the often considerable length of the auger fed by the pick-up assembly may therefore be quite uneven and irregular which leads to an unbalanced force distribution along the auger assembly. Consequently, high torques are applied to the support points on either side of the auger assembly which may lead to unwanted bending and/or twisting of the auger tube and/or supporting arms.

To overcome this problem, tension beams parallel to the auger tube were, for example, introduced to reduce irregular movements of the auger tube by distributing or partially transferring the forces on the ends of the auger tube onto the tension beam. However, this known technical concept has some disadvantages. Firstly, adding a heavy and rigid tension beam to the harvesting header increases the weight and the complexity of the header construction. Secondly, crop carryover along the auger tube may lead to crop accumulation between the auger tube and the tension beam. Finally, such a tension beam limits the access possibilities to the auger assembly and to the pick-up assembly, e.g. in maintenance cases.

It is therefore the object of the present invention to overcome at least some of the shortcomings of the prior art and to provide an auger assembly which can withstand large bending and twisting forces, comprises a simple and affordable structure, is void of additional external components and ensures a reliable lateral transport function.

This object is achieved by the features of claim 1 of the present invention. Preferred embodiments and beneficial options are described in the dependent claims.

According to the present invention an auger assembly for a forage harvester comprises a frame unit having a floor element, an auger tube having an auger axis, a first end and a second end, at least one flighting attached to the auger tube, a first auger arm and a second auger arm attached to the frame unit for holding the auger tube between the first auger arm and the second auger arm, at least one drive assembly configured for rotating the auger tube, the at least one drive assembly being located on at least one side of the auger tube, and a first bearing for rotatably holding the first end of the auger tube at the first auger arm and a second bearing for rotatably holding the second end of the auger tube at the second auger arm, wherein a third bearing is provided on the auger tube between the first bearing and the second bearing, the third bearing ensuring the orientation of the auger axis parallel to the floor element of the frame unit.

This construction with at least one additional bearing on one end or on both ends of the auger tube avoids unnecessary and detrimental bending or portion of the auger tube and/or supporting arms in the case of an uneven crop intake. Furthermore, crop accumulation by additional stabilization components is avoided. In addition, this technical solution does not limit the access to the remaining components of the header. By the at least one additional bearing, the auger tube is forced to maintain the position parallel to the floor element of the frame unit and therefore parallel to the ground.

In a preferred embodiment, a first bearing shaft may be provided at the first end of the auger tube and a second bearing shaft may be provided at the second end of the auger tube, the first bearing shaft and the second bearing shaft being oriented along the auger axis. The first bearing shaft and second bearing shaft enable a compact accommodation of the respective ends of the auger tube at the first auger arm and the second auger arm, respectively. In this embodiment, the first and second bearing shafts are preferably oriented along the auger axis. It is further advantageous that the first bearing be provided at the distal end of the first bearing shaft and that the second bearing be provided at the distal end of the second bearing shaft. This positioning optimizes the force distribution along the auger tube and also enables a suitable access to the respective bearings for maintenance.

According to another embodiment, the first bearing shaft may comprise a first bearing shaft flange which is connected to a first auger tube flange provided at the auger tube, and the second bearing shaft comprises a second bearing shaft flange which is connected to a second auger tube flange provided at the auger tube. It is noted that these flanges at the first or second auger tube and the first or second bearing shaft, respectively, need not be full discs but may also comprises a star-like or spoke-like configuration while maintaining their main technical objective which is to sufficiently support the bearing shaft within the auger tube.

In a particularly preferred embodiment, the third bearing may be located adjacent to the first bearing and a fourth bearing may be located adjacent to the second bearing. With this construction, any bending forces or torques are optimally distributed such that a minimal bending and torsion of the auger tube occur. Depending on which side the drive assembly is located, the third and/or fourth bearing may be dimensioned accordingly in order to maximize the compensation of bending and/or torsion forces.

In another embodiment, the first bearing and the third bearing may be accommodated in a first housing and/or wherein the second bearing and the fourth bearing may be accommodated in a second housing. The bearing housings on either side protect the bearings and enable suitable access for maintenance. The bearing housings may be partly or completely enclose the bearings such that the function of the bearings is not negatively influenced. Furthermore, the use of standard sizes of the bearings is supported, and also varying the distance between the first and the third bearing and between the second and the fourth bearing.

In a further preferred embodiment, a drive wheel of the drive assembly may be arranged adjacent to the first bearing and/or the second bearing. This ensures a direct driving of the auger tube. Preferably, the drive assembly comprises a belt drive, a gearbox, chains, pulleys, sprockets, tensioners, drive shafts and is configured to be operatively coupled to a driveline of the forage harvester. In a particularly preferred embodiment, the drive assembly includes a belt drive which engages with the drive wheel adjacent to the first or second bearing. It is noted that indirect drive assemblies with a plurality of belts, chains, pulleys, sprockets, tensioners, drive shafts and other drive components may also be possible.

In a further embodiment, the third bearing is positioned adjacent to the first bearing keeping a distance of at least 25 cm, preferably of at least 15 cm, and most preferred of at least 8 cm along the auger axis to the first bearing, or alternatively the third bearing is positioned adjacent to the second bearing keeping a distance of at least 25 cm, preferably of at least 15 cm, and most preferred of at least 8 cm along the auger axis to the second bearing. These distances have proven reliable and suitable for the torque load of a typical auger assembly having an auger diameter of 650 mm and an auger tube diameter of 395 mm used in a forage harvester. Of course, these distances may be increased or decreased depending on which harvesting machine is used with which parameters such as width of the header, auger diameter, auger weight etc.

A further aspect of the invention includes an agricultural harvester including an auger assembly as described above.

Details and further advantages and benefits of the present invention may be obtained from the following detailed description in combination with the accompanying drawings in which:
- Fig. 1: shows a schematic perspective view of a preferred embodiment of the auger assembly according to the invention;
- Fig. 2: shows a top section view of the auger assembly of Fig. 1;
- Fig. 3: shows a first detail of the auger assembly of Fig. 2, and
- Fig. 4: shows a second detail of the auger assembly of Fig. 2.

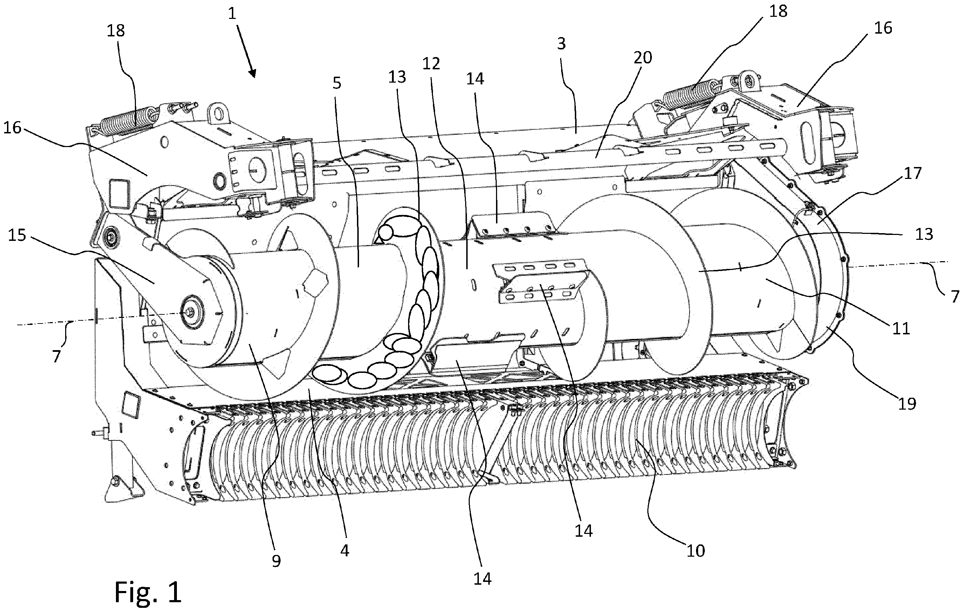

In Fig. 1 is depicted a schematic perspective view of a preferred embodiment of the auger assembly according to the invention. It should be noted that the auger assembly 1 is part of a header structure of an agricultural harvester, in the present embodiment of a forage harvester. For the purpose of intelligibility, only those portions and components of the header are described which contribute to the present invention.

Auger assembly 1 comprises a frame unit 3 on which most of the remaining elements of the assembly are supported including a substantially straight floor element 4, an auger tube 5 having an auger axis 7, a first end 9 and a second end 11. Also shown in Fig. 1 is a pick-up assembly 10 which in the present embodiment is a grass pick-up assembly supported on the frame unit 3 and configured for taking up the cut crop by rotating rakes (not shown). For the sake of brevity, details of the cutting device and the pick-up assembly are omitted in this detailed description.

During the harvesting process, the cut and picked-up grass must be transported to the central processing unit of the forage harvester. For these purposes, the auger assembly 1 is rotatably supported on a first auger arm 15 and a second auger arm 17 which are both pivotably mounted to the frame unit 3. The auger tube 5 is therefore held between the first auger arm 15 and the second auger arm 17 along auger axis 7 and comprises a flighting 13 mounted on the circumferential surface of the auger tube 5. In the present embodiment, there is a first flighting 13 mounted on a first side of the auger tube 5 and a second flighting 13 mounted on an opposing second side of the auger tube 5 such that cut crop will be transported from the distal ends of the auger tube 5 to the central portion 12 of the auger tube 5 upon a corresponding rotation of the auger tube 5. The central portion 12 comprises a plurality of transport paddles 14 mounted on the circumferential surface. The transport paddles 14 are positioned such that the crop which is transversely transported by the first and second flightings 13 towards the central portion 12 may then be directed in a circumferential direction towards the central processing device of the forage harvester. In the shown embodiment, the rotation direction of the auger tube 5 is clockwise when seen from the left side in the figures, i.e. from the first end 7 of the auger tube 5 (first auger arm 15).

On the upper side of the shown auger assembly 1 there is a lifting assembly 16 connected to the first auger arm 15 and the second auger arm 17 and configured for controlling the position of the auger assembly 1 with respect to the ground surface. The lifting assembly 16 comprises retaining means 18 and a transverse beam 20 connecting the components on the opposing ends of the auger assembly 1. The position of the auger assembly 1 with respect to the ground surface is controlled by a control unit (not shown) which is operably connected to a drive unit (not shown) which is configured for driving the lifting assembly 16. The auger assembly 1 is furthermore configured such that upon encountering a large obstacle on the ground surface the auger assembly 1 may be lifted above the ground surface so that its components are not damaged or destroyed.

A drive assembly 19 is furthermore part of the auger assembly 1 according to the invention and is shown on the right side of the embodiment of Fig. 1. In this embodiment, the drive assembly 19 comprises a belt drive (not shown) as is known in the art. It is noted that the drive assembly 19 could also be located on the opposite side of the auger tube 5 or located on both sides. Furthermore, instead of a belt drive, a chain drive or a gearbox or other driveline components may be used which connect the auger tube 5 in an operable manner with the driveline of the forage harvester. It is also possible that the drive assembly 19 is independently driven.

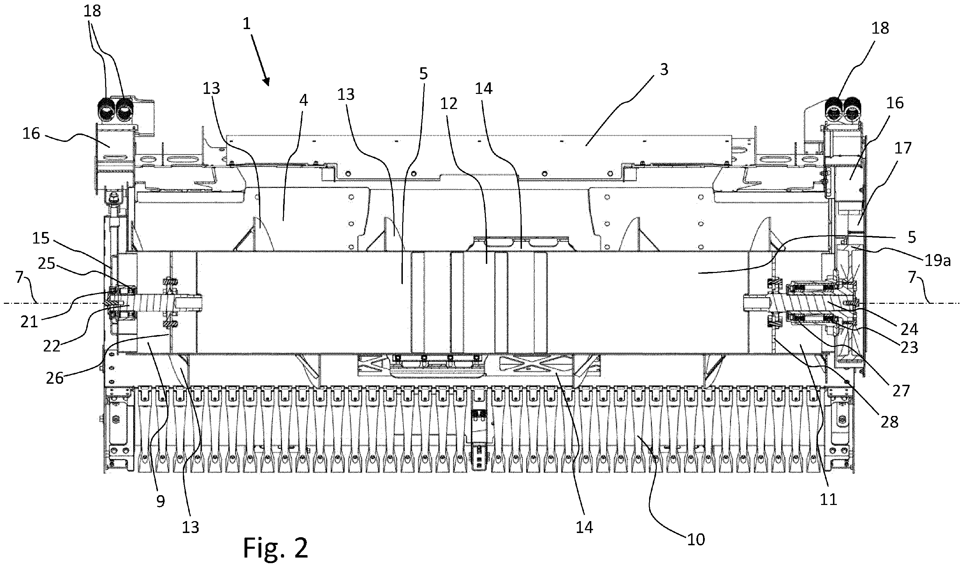

Fig. 2 shows a top section view of the auger assembly 1 in the preferred embodiment depicted in Fig. 1. The components which are most relevant for the description of the present invention are located inside the auger tube 5 and therefore those components can be seen in the section view of Fig. 2. Since the majority of components have already been described with respect to Fig. 1, a repeated description thereof is omitted. Rather, the following detailed description concentrates on the sections which have not yet been described.

Located on the first end 9 of the auger tube 5 is a first bearing 21 for rotatably holding the first end 9 of the auger tube 5 at the first auger arm 15. On the second end 11 of the auger tube 5 is positioned a second bearing 23 for rotatably holding the second end 11 of the auger tube 5 at the second auger arm 17. In the preferred embodiment, a third bearing 25 is positioned adjacent to the first bearing 21, and a fourth bearing 27 is positioned adjacent to the second bearing 23. In this configuration, the auger tube 5 is constrained to a position parallel to the floor, i.e. along the auger axis 7, even when there are strong forces applied on only one side of the auger tube 5, generated by an uneven crop load. In this shown embodiment, the bearing structure on the first end 9 and the second end 11, respectively, is a little different from each other. The reason being that the drive assembly 19 is located on the second end 11 which means that the rotation forces introduced by the drive assembly 19 generate a higher torque on this second end 11. This is compensated for by implementing a stronger bearing set up on the second end 11.

The first end 9 of the auger tube 5 comprises a first bearing shaft 22 along the auger axis 7. In this embodiment, the first bearing shaft 22 is firmly connected to the auger tube 5 by a first auger tube flange 26. On the distal end, the first bearing shaft 22 is connected to the first auger arm 15. Adjacent to this connection is a first housing 30 which encloses the first bearing 21 and the third bearing 25.

The second end 11 of the auger tube 5 comprises a second bearing shaft 24 which also lies in the auger axis 7. On the opposing end towards the central portion 12 of the
auger tube 5, the second bearing shaft 24 is firmly attached to a second auger tube flange 28. On the distal end, the second bearing shaft 24 is connected to a drive wheel 19a which is driven by a belt or other driveline component (not shown) of the drive assembly 19. Adjacent to the drive wheel 19a is a second housing 32 which encloses the second bearing 23 and the fourth bearing 27. The second housing 32 is firmly attached to the second auger arm 17.

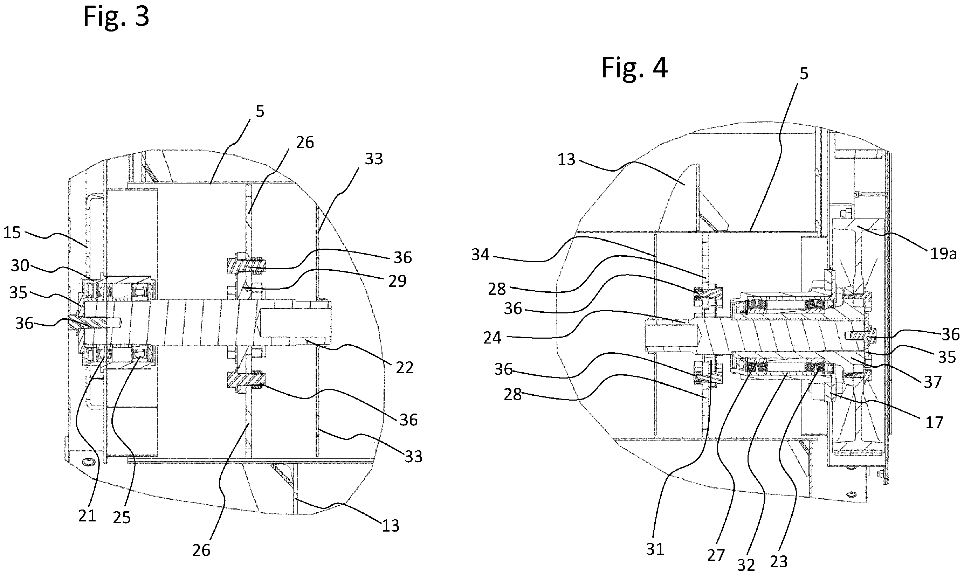

The details of the bearing structures on the first end 9 and the second end 11 are described now with respect to Figs. 3 and 4.

Fig. 3 is a detailed sectional view of the first end 9 of the auger tube 5. The first bearing shaft 22 is the unit which is configured to carry the auger tube 5 and to enable its rotation around the auger axis 7. There is a firm connection between the auger tube 5 and the first bearing shaft 22 by a circular attachment at the first auger tube flange 26 which is oriented perpendicular to the auger axis 7 and in this embodiment welded circumferentially to the inner surface of the auger tube 5. The attachment counterpart for the first auger tube flange 26 is a first bearing shaft flange 29 which radially extends from the outer surface of the first bearing shaft 22. It is noted that the first bearing shaft 22 may be welded to but could also be integrally formed with the first bearing shaft flange 29. The connection between the first auger tube flange 26 and the first bearing shaft flange 29 is provided by a plurality of bolts 36 and nuts positioned along the circumference of the first bearing shaft flange 29. One end of the first bearing shaft 22 is accommodated in an opening in a first additional flange 33 of the auger tube 5 for alignment purposes. In other words, said end of the first bearing shaft 22 is held along the auger axis 7 by being guided in the opening in the first additional flange 33 of the auger tube 5. This guiding function could also be achieved by a firm attachment of the first bearing shaft 22 at the first additional flange 33, e.g. by welding or a bolt connection as described above.

The other end of the first bearing shaft 22 includes the bearing assembly with the first bearing 21 and the third bearing 25. The inner diameter surface of the first bearing 21 and of the third bearing 25 is each press-fitted onto the outer surface of the first bearing shaft 22 with at least one distance element arranged between the first bearing 21 and the third bearing 25 to ensure a constant axial distance. For example, the distance may be achieved by arranging a plurality of washers or other ring-type elements. Fitted on the outer diameter surface of the first bearing 21 and of the third bearing 25 is the first housing 30 which serves as a connection element to the first auger arm 15. To secure the axial position of the first bearing 21 and of the third bearing 25, a cover element 35 is provided which is attached in an axial direction to the outer end of the outer distance element by a bolt 36. The first housing 30 is firmly connected to the first auger arm 15, however, those elements could also be integrally formed. Axial movement is possible between first auger arm 15 and first bearing shaft 22, however it is also possible to firmly connect those elements.

In the shown preferred embodiment the third bearing 25 has a predetermined axial distance from the first bearing 21 which is determined by the dimensions of the auger tube 5 including all its components and the maximally incurring forces along the length of the auger tube 5. Calculation and simulations for the preferred embodiment have revealed that for a typical outer diameter of an auger including implements of 650 mm, an outer diameter of the auger tube 5 of 395 mm, an outer diameter of the first bearing 21 and the third bearing 25 of approximately 150 mm and an inner diameter of the first bearing 21 and the third bearing 25 of approximately 80 mm, the distance of the first bearing 21 and the third bearing 25 is at least 250 mm, preferably at least 150 mm and most preferred at least 80 mm along the auger axis 7. It is noted that other dimension are of course possible depending on the intended use and environment of the auger assembly according to the invention.

Fig. 4 is a detailed sectional view of the second end 11 of the auger tube 5. The second bearing shaft 24 is the unit which is configured to carry the auger tube 5 on this end, to enable its rotation around the auger axis 7, and to be rotationally driven by drive assembly 19. There is a firm connection between the auger tube 5 and the second bearing shaft 24 by a circular attachment at the second auger tube flange 28 which is oriented perpendicular to the auger axis 7, and in this embodiment welded circumferentially to the inner surface of the auger tube 5. The attachment counterpart for the second auger tube flange 28 is a second bearing shaft flange 31 which radially extends from the outer surface of the second bearing shaft 24. It is noted that the second bearing shaft 24 may be welded to but could also be integrally formed with the second bearing shaft flange 31. The connection between the second auger tube flange 28 and the second bearing shaft flange 31 is provided by a plurality of bolts 36 and nuts positioned along the circumference of the second bearing shaft flange 31. One end of the second bearing shaft 24, namely the end toward the central portion of the auger tube 5, is accommodated in an opening in a second additional flange 34 of the auger tube 5 for alignment purposes. In other words, said end of the second bearing shaft 24 is also supported and held along the auger axis 7 by being guided in the opening in the second additional flange 34 of the auger tube 5. This guiding function could also be achieved by a firm attachment of the second bearing shaft 24 at the second additional flange 34, e.g. by welding or a bolt connection as described above.

The other, outer end of the second bearing shaft 24 includes the bearing assembly with the second bearing 23 and the fourth bearing 27 and also the connection to the drive assembly 19 via drive wheel 19a. Arranged between the outer diameter of the second bearing shaft 24 and the inner diameter surfaces of the second bearing 23 and of the fourth bearing 27 by a press fit is a hub 37. Hub 37 is fitted onto the outer surface of the second bearing shaft 24 by a press fit and/or a form fit such that there is a firm connection. On the outer surface of the hub 37 are arranged the second bearing 23 and the fourth bearing 27 in a press-fitted manner with at least one distance element between them. The at least one distance element ensures a constant axial distance between the two bearings. For example, the distance may be achieved by arranging a plurality of washers or other ring-type elements. In another embodiment, the hub may comprise corresponding notches or channels to accommodate the bearings. The second bearing 23 and the fourth bearing 27 are enclosed by a second housing 32 which is firmly attached to the second auger arm 17. The connection between the second housing 32 and the outer surface of each of the second bearing 23 and the fourth bearing 27 may also be by press fit, as in the shown embodiment, or by form fit.

Firmly attached to the outer end of the hub 37 is the drive wheel 19a which introduces the rotational force onto the auger tube 5. The connection between the hub 37 and the drive wheel 19a is made via axially arranged bolts which pass through corresponding aligned axial holes along the circumference of the hub 37 and the drive wheel 19a. Alternative attachment means which have similar functional parameters are also possible. Finally, a cover element 35 is mounted at the outer end of the second bearing shaft 24.

In a similar fashion as described above, the fourth bearing 27 has a predetermined axial distance from the second bearing 23 which is determined by the dimensions of the auger tube 5 including all its components and the maximally incurring forces along the length of the auger tube 5. Calculation and simulations for the preferred embodiment have revealed that for a typical outer diameter of an auger including implements of 650 mm, an outer diameter of the auger tube 5 of 395 mm, an outer diameter of the second bearing 23 and the fourth bearing 27 of approximately 150 mm and an inner diameter of the second bearing 23 and the fourth bearing 27 of approximately 80 mm, the distance between the second bearing 23 and the fourth bearing 27 is at least 250 mm, preferably at least 150 mm and most preferred at least 80 mm along the auger axis 7. It is noted that other dimension are of course possible depending on the intended use and environment of the auger assembly according to the invention. For the shown embodiment, the distance between the second bearing 23 and the fourth bearing 27 is larger than the distance between first bearing 21 and the third bearing 25.

In another embodiment of the present invention which is not shown in the figures, the third bearing may be arranged on the non-drive side of the auger tube 5 more towards its central portion 12 such that the entire auger assembly 1 only comprises a third bearing but not a fourth one. The first housing 30 may then extend axially over a longer first bearing shaft 22. Additional auger flanges may then be necessary to keep the auger tube 5 aligned along the auger axis. In an alternative embodiment, the third bearing may be located on the drive side of the auger tube 5 with a larger distance between the respective bearings as described above for the preferred embodiment. Also, the bearing shaft may have different diameters along its length to accommodate the third bearing.

With the subject matter of the present invention, an auger assembly is provided which can withstand large bending and twisting forces, comprises a simple and affordable structure, is void of additional external components and ensures a reliable lateral transport function.

### List of reference numerals

- 1: Auger assembly
- 3: Frame unit
- 4: Floor element
- 5: Auger tube
- 7: Auger axis
- 9: First end
- 10: Pick-up
- 11: Second end
- 12: Central portion
- 13: Flighting
- 14: Transport paddle
- 15: First auger arm
- 16: Lifting assembly
- 17: Second auger arm
- 18: Retaining means
- 19: Drive assembly
- 19a: Drive wheel
- 20: Transverse beam
- 21: First bearing
- 22: First bearing shaft
- 23: Second bearing
- 24: Second bearing shaft
- 25: Third bearing
- 26: First auger tube flange
- 27: Fourth bearing
- 28: Second auger tube flange
- 29: First bearing shaft flange
- 30: First housing
- 31: Second bearing shaft flange
- 32: Second housing
- 33: First additional flange
- 34: Second additional flange
- 35: Cover element
- 36: Bolt
- 37: Hub

## Claims

1. Auger assembly (1) for a forage harvester comprising:
a frame unit (3) having a floor element (4),
an auger tube (5) having an auger axis (7), a first end (9) and a second end (11),
at least one flighting (13) attached to the auger tube (5),
a first auger arm (15) and a second auger arm (17) attached to the frame unit (3) for holding the auger tube (5) between the first auger arm (15) and the second auger arm (17),
at least one drive assembly (19) configured for rotating the auger tube (5), the at least one drive assembly (19) being located on at least one side of the auger tube (5),
a first bearing (21) for rotatably holding the first end (9) of the auger tube (5) at the first auger arm (15) and a second bearing (23) for rotatably holding the second end (11) of the auger tube (5) at the second auger arm (17),
wherein a third bearing (25) is provided on the auger tube (5) between the first bearing (21) and the second bearing (23), the third bearing (25) ensuring the orientation of the auger axis (7) parallel to the floor element (4) of the frame unit (3).

2. Auger assembly (1) according to claim 1, wherein a first bearing shaft (22) is provided at the first end (9) of the auger tube (5) and wherein a second bearing shaft (24) is provided at the second end (11) of the auger tube (5), the first bearing shaft (22) and the second bearing shaft (24) being oriented along the auger axis (7).

3. Auger assembly (1) according to claim 2, wherein
the first bearing (21) is provided at the distal end of the first bearing shaft (22) and
the second bearing (23) is provided at the distal end of the second bearing shaft (24).

4. Auger assembly (1) according any of claims 2 and 3, wherein
the first bearing shaft (22) comprises a first bearing shaft flange (29) which is connected to a first auger tube flange (26) provided at the auger tube (5), and
the second bearing shaft (24) comprises a second bearing shaft flange (31) which is connected to a second auger tube flange (28) provided at the auger tube (5).

5. Auger assembly (1) according to any of the previous claims, wherein the third bearing (25) is located adjacent to the first bearing (21) and a fourth bearing (27) is located adjacent to the second bearing (23).

6. Auger assembly (1) according to claim 5, wherein the first bearing (21) and the third bearing (25) are accommodated in a first housing (30) and/or wherein the second bearing (23) and the fourth bearing (27) are accommodated in a second housing (32).

7. Auger assembly (1) according to any of the previous claims, wherein a drive wheel (19a) of the drive assembly (19) is arranged adjacent to the first bearing (21) and/or the second bearing (23).

8. Auger assembly (1) according to any of the previous claims, wherein the drive assembly (19) comprises a belt drive, a gearbox, chains, pulleys, sprockets, tensioners, drive shafts and is configured to be operatively coupled to a driveline of the forage harvester.

9. Auger assembly (1) according to any of the previous claims, wherein
the third bearing (25) is positioned adjacent to the first bearing (21) keeping a distance of at least 25 cm, preferably of at least 15 cm, and most preferred of at least 8 cm along the auger axis (7) to the first bearing (21), or alternatively
the third bearing (25) is positioned adjacent to the second bearing (23) keeping a distance of at least 25 cm, preferably of at least 15 cm, and most preferred of at least 8 cm along the auger axis (7) to the second bearing (23).

10. Agricultural harvester including an auger assembly (1) according to any of the previous claims.
